# EUROPEAN PATENT SPECIFICATION

(11) **EP 3 309 311 B1**
(45) Date of publication and mention of the grant of the patent: **04.12.2019**
(21) Application number: 16194134.9
(22) Date of filing: 17.10.2016
(51) Int. Cl.: E03F 5/22, E03F 5/26, F16K 31/126

(54) **FLUSH VALVE AND PUMP STATION COMPRISING SUCH FLUSH VALVE**
SPÜLVENTIL UND PUMPSTATION MIT SOLCH EINEM SPÜLVENTIL
VANNE DE VIDANGE ET STATION DE POMPAGE COMPRENANT UNE TELLE VANNE

(43) Date of publication of application: 18.04.2018
(73) Proprietor: Xylem Europe GmbH, 8200 Schaffhausen (CH)
(72) Inventor: BRATTHÄLL, Johan, 132 37 SALTJÖ BOO (SE)
(74) Representative: Brann AB

(56) References cited:
- EP-A1- 0 359 730
- EP-A1- 0 384 903
- EP-A1- 0 472 509
- EP-A1- 1 154 085
- JP-A- H1 130 198
- JP-A- 2007 029 829
- US-A- 5 601 111

## Description

### Technical field of the Invention

The present invention relates generally to the technical field of devices for preventing accumulation of solid matter in a pump station, and in particular to the technical field of devices for automatic mixing/circulation of the content of the pump station.

In accordance with a first aspect, the present invention relates to a flush valve configured to be connected with a pump that is located in a reservoir containing liquid. In accordance with a second aspect, the present invention relates to a pump station comprising a reservoir configured to contain liquid, a pump that is located in said reservoir, and a flush valve connected with the pump. The pump station is configured to contain liquid comprising solid matter, organic as well as inorganic, such as sewage/wastewater.

The flush valve comprises an inlet configured to be in fluid communication with a volute of said pump, an outlet configured to open into said reservoir, and a valve arrangement configured to open and close, respectively, the flush valve. The valve arrangement comprises a first chamber, a second chamber that is partly delimited by a diaphragm, and a conduit extending between and connecting the first chamber and the second chamber. Thereto, the valve arrangement comprises a third chamber that connects the inlet and the outlet of the flush valve and that is partly delimited by said diaphragm, the third chamber comprising a valve member configured to control a fluid flow from the inlet to the outlet based on the position of said diaphragm, and a control mechanism arranged in said conduit.

### Background of the Invention

The mixing/circulation of the content of the pump station is required in order to prevent sedimentation of solid matter at the bottom of the pump sump and in order to prevent accumulation of grease and the like at the liquid surface. If no mixing is performed, accumulation of solid matter and grease will inevitably occur in the pump station, and this mean a lot of problems such as a bad smell, risk for explosions, problems with corrosion, etc.

It is known to use so-called flush valve arrangements, which are arranged at the pump outlet and configured to temporarily direct the pumped liquid back into the pump sump upon start of the pump cycle in order to obtain mixing/circulation of the content of the pump station. See for instance the applicants own European Patent EP0472509. However, known flush valve arrangements are operating/open each and every pump cycle whether it is needed or not, i.e. at the beginning of pump cycle in connection with activation of the pump. During the time the flush valve is open the pump consumes energy without performing any useful pumping work. In some applications the flush valve can be open for about 20 seconds before the flush valve is closed, and thereafter the active pump time can be about 30 seconds.

### Object of the Invention

The present invention aims at obviating the aforementioned disadvantages and failings of previously known flush valves, and at providing an improved flush valve. A primary object of the present invention is to provide an improved flush valve of the initially defined type that is not operating/open each and every pump cycle. It is another object of the present invention to provide a flush valve, which is automatic. It is another object of the present invention to provide a flush valve, which can be adapted to the operational conditions of the specific pump station.

### Summary of the Invention

According to the invention at least the primary object is attained by means of the initially defined flush valve and pump station having the features defined in the independent claims. Preferred embodiments of the present invention are further defined in the dependent claims.

According to the present invention, there is provided a flush valve of the initially defined type and a pump station comprising such a flush valve, wherein the flush valve is characterized in that the control mechanism comprises a stepper and a plunger, the plunger being displaceable back and forth between an inactive position and an active position, the plunger being biased towards said inactive position and being displaced towards said active position by means of the pressure [P2] in the second chamber when the pressure [P2] in the second chamber is greater than a threshold value [PT], the plunger being configured to engage the stepper when the plunger is in the active position, wherein the stepper, each time the plunger engages the stepper, changes position once in a repeated set of positions according to a step-by-step routine, and wherein the stepper in at least one position of said set of positions enables fluid communication between the first chamber and the second chamber via said conduit.

Thus, the present invention is based on the insight that there is normally redundant work to circulate the wastewater/ liquid in the pump station each and every pump cycle. For some pump stations having certain operational conditions the mixing/circulation may for instance be needed every second pump cycle, or every third or fourth or fifth pump cycle, etc., and each and every pump cycle the flush valve is closed energy will be saved in relation to prior art flush valves.

In a preferred embodiment of the present invention, the stepper is arranged in a recess and is configured to change position by a revolving motion in relation to said recess. This means that the individual positions of the set of positions of the stepper are distributed about one full turn/revolution, thereby providing an automatic repetition of the set of positions.

According to a preferred embodiment, the control mechanism comprises a timing mechanism, the timing mechanism being located in the conduit between the first chamber and the stepper and being configured to regulate the smallest cross sectional area of the conduit. Thereby, when the flush valve is open/active, the time period the flush valve is open can be adapted to the specific operational conditions of the individual pump station.

According to a preferred embodiment the first chamber is at least partly delimited by a bellows, an outer side of the bellows being configured to face the liquid in the reservoir. It is also preferred that the pressure threshold [PT] is equal to a pressure [P1] in the first chamber.

Further advantages with and features of the invention will be apparent from the other dependent claims as well as from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic cross sectional side view of an inventive pump station,
- Fig. 2: is a schematic cross sectional side view of an inventive flush valve,
- Fig. 3: is a schematic exploded perspective view of a part of the control mechanism of the flush valve,
- Fig. 4: is a schematic side view of a part of the flush valve comprising the part of the control mechanism disclosed in figure 3,
- Fig. 5: is a schematic cross sectional side view of a preferred embodiment of the control mechanism of the flush valve, wherein the stepper of the control mechanism is disclosed in a closed state and the stepper is disclosed in an inactive position,
- Fig. 6: is a schematic cross sectional side view of the control mechanism disclosed in figure 5, wherein the plunger engages the stepper, and
- Fig. 7: is a schematic cross sectional side view of the control mechanism disclosed in figures 5 and 6, wherein the stepper is disclosed in an open state and the stepper is disclosed in an active position.

### Detailed description of preferred embodiments of the invention

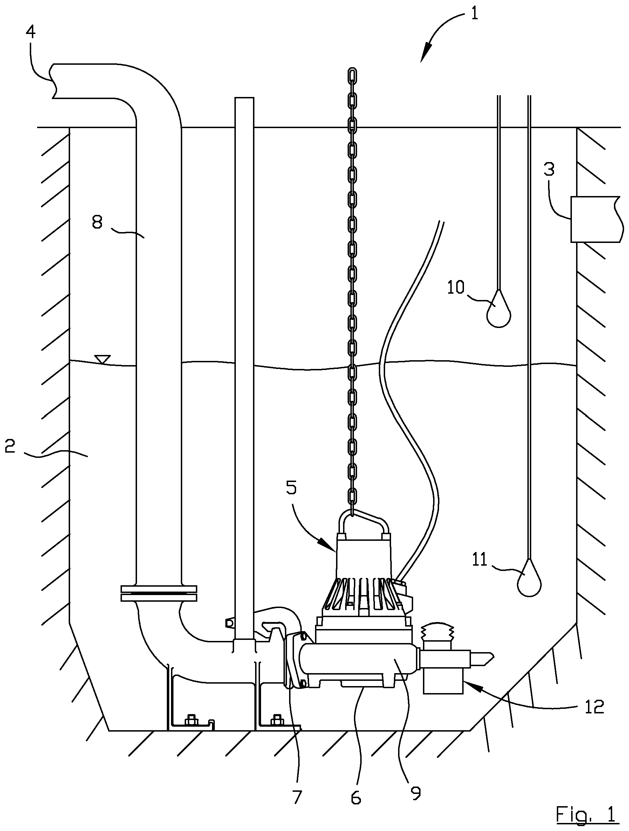

Reference is initially made to figure 1, disclosing an inventive pump station, generally designated 1. The pump station 1 is configured to contain liquid comprising solid matter, usually both organic and inorganic solid matter, such as sewage/wastewater. The present invention relates generally to the technical field of devices for preventing accumulation of solid matter in such a pump station 1, by automatic mixing/circulation of the content (liquid and solid matter) of the pump station 1. The pump station 1 comprises a reservoir 2, also known as tank or pump sump, which is configured to contain the liquid/slurry. The reservoir 2 comprises at least one inlet 3 for influent wastewater and an outlet 4 for effluent wastewater.

The pump station 1 comprises a pump 5 that is located in the reservoir 2 and that is configured to pump/transport the wastewater away from the pump station and towards a wastewater treatment plant. The pump 5 is in the disclosed embodiment a submersible centrifugal pump, and the pump 5 comprises an inlet 6 and an outlet 7 that is connected to the outlet 4 of the reservoir 2 by means of an outlet pipe 8. The pump 5 comprises a rotatable impeller (not disclosed) that is arranged in a volute 9 of the pump 5. The impeller and the volute 9 together compose a hydraulic unit of the pump 5. A conventional pump station 1 comprises at least one pump start level sensor 10 and a pump stop level sensor 11, the pump 5 being activated when the liquid level in the reservoir 2 reaches the pump start level sensor 10 and the pump 5 being stopped/deactivated when the liquid level reaches the pump stop level sensor 11.

The inventive pump station 1 also comprises an inventive flush valve, generally designated 12, that is connected with/ attached to the pump 5, more precisely connected with/attached to the volute 9 of the pump 5. The term connected with the pump 5, include direct as well as indirect connection between the flush valve and the pump/volute. Thus, the flush valve can be directly attached to the pump and be in fluid communication with the volute of the pump. Thereto, the flush valve can be attached to the outlet pipe 8 or at the outlet of the pump, i.e. indirectly connected with the volute of the pump, but still in fluid communication with the volute of the pump.

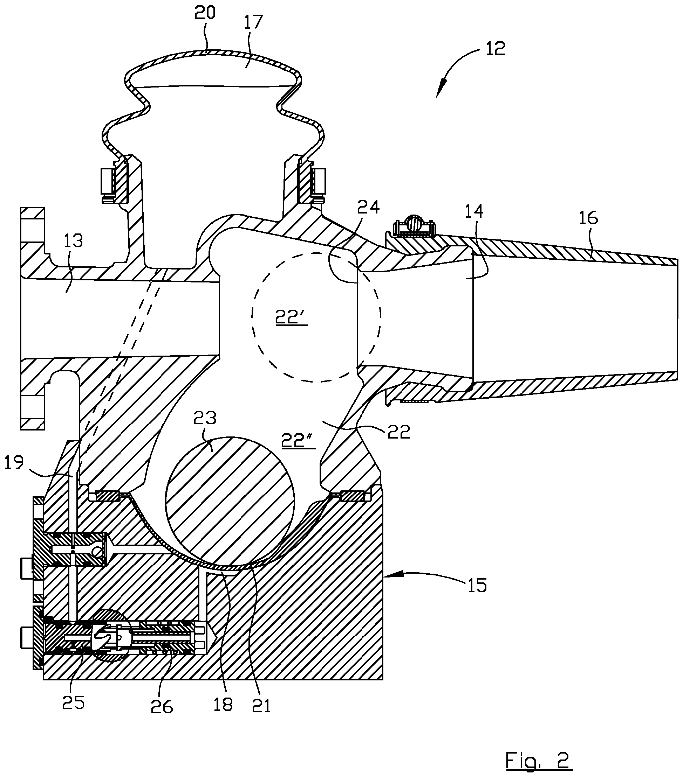

Reference is now also made to figure 2, disclosing a schematic embodiment of the inventive flush valve 12.

The flush valve 12 comprises an inlet 13 that is in fluid communication with the volute 9 of the pump 5, an outlet 14 that open into said reservoir 2, and a valve arrangement 15. In the disclosed embodiment, the flush valve 12 comprises also an outlet nozzle 16 connected to the outlet 14 of the flush valve 12. The nozzle 16 is configured to direct the outgoing liquid flow in a suitable direction into the reservoir 2, and may for instance comprise a bend.

In figure 2 the flush valve 12 (more precisely the valve arrangement 15) is open, i.e. permits liquid flow from the inlet 13 to the outlet 14. When the pump 5 is active and the flush valve 12 is open, the pumped liquid will be ejected from the volute 9 via the flush valve 12 instead of via the outlet pipe 8 since the counter-pressure in the flush valve 12 is lower than in the outlet pipe 8, and when the pump 5 is active and the flush valve 12 is closed, the pumped liquid will be ejected from the volute 9 via the outlet pipe 8 in a conventional way.

The valve arrangement 15 comprises a control circuit that comprises a first chamber 17, a second chamber 18 and a conduit 19 extending between and connecting said first chamber 17 and said second chamber 18. During operation the control circuit is a closed system and comprises a control liquid, preferably hydraulic oil. The first chamber 17 is primarily a storage chamber. The control liquid has a first pressure [P1] in the first chamber 17.

In the disclosed embodiment the first chamber 17 is at least partly delimited by a bellows 20, an outer side of the bellows 20 being configured to face the liquid in the reservoir 2. The bellows 20 is arranged to expand and contract as a response to control liquid being pressed into the first chamber 17 and released from the first chamber 17, respectively. Thereby the first pressure [P1] in the first chamber 17 is equal to the fluid pressure acting/present on the outer side of the bellows 20. The second chamber 18 is partly delimited by a diaphragm 21. The control liquid has a second pressure [P2] in the second chamber 18.

The valve arrangement 15 comprises also a third chamber 22 that connects the inlet 13 and the outlet 14 of the flush valve 12, and that is partly delimited by said diaphragm 21. The third chamber 22 comprises a first portion 22' arranged aligned with the inlet 13 and outlet 14 of the flush valve 12, and a second portion 22" that is located below the first portion 22'. The second chamber 18 is located below the third chamber 22, i.e. below the second portion 22" of the third chamber 22, and the first chamber 17 is preferably arranged at a level above the third chamber 22. The third chamber 22 comprises a valve member 23 configured to control fluid flow from the inlet 13 to the outlet 14 of the flush valve 12 based on the position/state of said diaphragm 21. In the preferred embodiment the valve member 23 is constituted by a ball/sphere made of metal, which can rotate freely.

When the valve member 23 is located at the outlet 14 of the flush valve 12, disclosed by means of phantom lines in figure 2, the flush valve 12 (more precisely the valve arrangement 15) is closed, i.e. prevents liquid flow from the inlet 13 to the outlet 14.

According to the present invention the flush valve 12 comprises a control mechanism arranged in the conduit 19 extending between the first chamber 17 and the second chamber 18. The control mechanism will be described in more detail herein below. However, the overall function/operation of the flush valve 12 will be described with reference to a flush valve 12 lacking said control mechanism.

When the pump 5 is inactive and the flush valve 12 is open, the stagnant liquid in the reservoir 2 fills up the entire third chamber 22 and the volute 9 of the pump 5, wherein the fluid pressure acting on the upper side of the diaphragm 21 in the second portion 22" of the third chamber 22 is more or less equal to the fluid pressure acting/present on the outer/upper side of the bellows 20. Thereto, the valve member 23 rests on top of the diaphragm 21 due to gravity. As a result the second pressure [P2] in the second chamber 18 is greater than the first pressure [P1] in the first chamber 17. Thereby, given that the second chamber 18 is in fluid communication with the first chamber 17, the second chamber 18 has a minimum volume, preferably not equal to zero, and the first chamber 17 has a maximum volume, and the bellows 20 is in the expanded state. This is the basic state of the flush valve 12.

When the pump 5 is activated fluid flow is generated from the inlet 13 to the outlet 14 of the flush valve 12, which fluid flow is used to mix/circulate the content of the pump station 1. Said fluid flow passing through the first portion 22' of the third chamber 22 causes the fluid pressure in the second portion 22" of the third chamber 22 to decrease, and eventually the pressure difference across the diaphragm 21 is enough to lift the diaphragm 21 and the valve member 23. In other words, when the second pressure [P2] in the second chamber 18 is less than the first pressure [P1] in the first chamber 17, the volume of the second chamber 18 will increase and the volume of the first chamber 17 will decrease. Thus, the control fluid will move from the first chamber 17 via the conduit 19 to the second chamber 18. Finally, the second chamber 18 has a maximum volume, and the first chamber 17 has a minimum volume. When the diaphragm 21 is lifted the valve member 23 will be displaced from the second portion 22" of the third chamber 22 to the first portion 22' of the third chamber 22. When the valve member 23 reaches the first portion 22' of the third chamber 22, the valve member 23 will be caught by the fluid flow and brought into engagement with a valve seat 24 thereby closing the flush valve 12 (phantom lines). Thus, the pump 5 is still active and the flush valve 12 is now closed, i.e. the pump 5 starts to empty the reservoir 2 via the outlet pipe 8.

In a flush valve 12 lacking a control mechanism, the second pressure [P2] in the second chamber 18 will now be equal to the pump pressure that is present in the third chamber 22, which is greater then the first pressure [P1] in the first chamber 17. Thereby, the control fluid will be pressed back from the second chamber 18 to the first chamber 17 via the conduit 19 and the diaphragm 21 will take the lower position/state. When the pump 5 is deactivated the valve member 23 will fall down into the second portion 22" of the third chamber 22 and the flush valve 12 is back in the basic state.

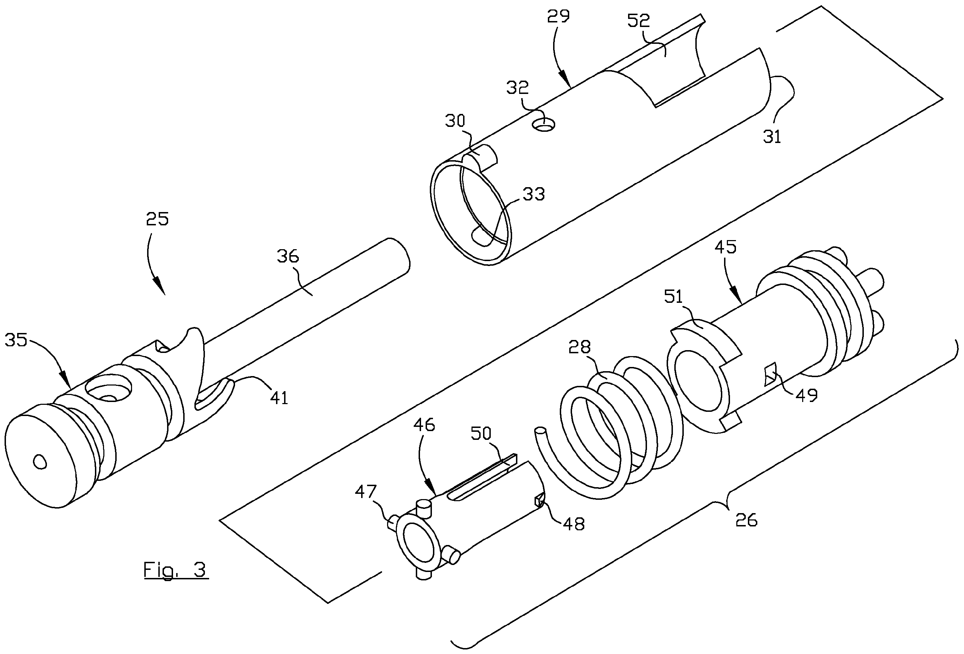

Reference is now made to figures 3 to 7, disclosing a preferred embodiment of the control mechanism of the valve arrangement 15.

The above-mentioned control mechanism is essential for the present invention, and is arranged in the conduit 19 extending between the first chamber 17 and the second chamber 18.

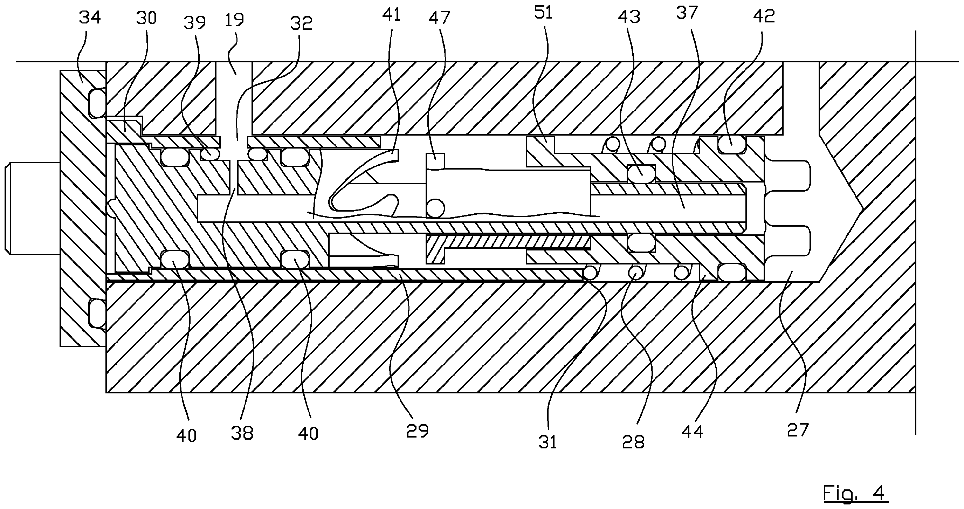

The control mechanism comprises a stepper arrangement comprising a stepper, generally designated 25, and a plunger, generally designated 26. The stepper arrangement is configured to enable and prevent, respectively, fluid communication between the first chamber 17 and the second chamber 18. The plunger 26 is displaceable back and forth in a recess 27 between an inactive position (to the right in the figure 4) and an active position (to the left in the figure 4). The plunger 26 is biased towards the inactive position by means of a spring member 28, preferably a helical spring. When the second pressure [P2] in the second chamber 18 is greater than a threshold pressure [PT], the plunger 26 is displaced towards the active position. The pressure threshold [PT] is preferably equal to or more than the first pressure [P1] in the first chamber 17.

The plunger 26 is configured to engage the stepper 25 when the plunger 26 is displaced towards the active position, and each time the plunger 26 engage the stepper 25 the stepper will change position once in a repeated set of positions according to a step-by-step routine. The set of positions comprises at least two positions, preferably more than three positions. Thus, upon each new occasion the pump 5 is active and the flush valve 12 is closed, the second pressure [P2] in the second chamber 18 will become higher than the pressure threshold [PT] and the stepper 25 changes position once.

In at least one position of the set of positions the stepper 25 enables fluid communication between the first chamber 17 and the second chamber 18 via said conduit 19.

Thereto, the stepper 25 prevents fluid communication between the first chamber 17 and the second chamber 18 in at least one position of said set of positions. When fluid communication is prevented the second chamber 18 will retain the maximum volume even when the pump 5 is inactive, and when the pump 5 is reactivated the valve member 23 will directly engage the valve seat 24. When fluid communication is enabled, the control fluid will move from the second chamber 18 to the first chamber 17 and when the pump 5 is deactivated the valve member 23 will fall into the second portion 22" of the third chamber 22, and the flush valve 12 is back in the basic state.

The stepper 25 is arranged in the same recess 27 as the plunger 26 and is preferably configured to change position by a revolving motion in relation to said recess 27. Thus, each time the stepper 25 is engaged by the plunger 26, the stepper 25 will turn a predetermined degree, for instance 120, 90, 72, 60, etc. degrees corresponding to 3, 4, 5, 6, etc. positions every full turn/revolution of the stepper 25. A linear motion of the stepper 25 in relation to the recess 27 is also conceivable, but not disclosed, or a combination of linear and revolving motion.

A preferred embodiment of the stepper arrangement of the control mechanism is disclosed in the figures and will now be described in detail.

The stepper arrangement comprises a guide sleeve, generally designated 29, that is arranged as a liner in the recess 27 and that comprises locking means 30 in order to prevent rotation of the guide sleeve 29 in relation to the recess 27. In the disclosed embodiment the locking means 30 is constituted by a projection that is in engagement with a corresponding slit in the recess 27. Preferably there is a small radial play between the guide sleeve 29 and the recess 27. The recess 27 is part of the conduit 19 that extends between the first chamber 17 and the second chamber 18. The recess 27 is preferably a cylindrical boring in the flush valve 12. The guide sleeve 29 has an axial length equal to about 2/3 of the total axial length/depth of the recess 27, and presents an end rim 31 (facing right in figure 4).

The portion of the conduit 19 that extends to/from the first chamber 17 open in the radial direction into the recess 27, at a location overlapped by the guide sleeve 29. The guide sleeve 29 comprises an opening 32 that is aligned with the portion of the conduit 19 extending to the first chamber 17. The stepper 25 is inserted into the guide sleeve 29, and is prevented from moving in the axial direction by means of a internal shoulder 33 of the guide sleeve 29 and an end cap 34 closing the recess 27.

The stepper 25 comprises a base portion 35, wherein a small radial play is arranged between the base portion 35 of the stepper 25 and the inner side of the guide sleeve 29, such that the stepper 25 may rotate in relation to the guide sleeve 29. The base portion 35 of the stepper 25 is located distant from the end rim 31 of the guide sleeve 29 and at a location overlapping the opening 32 in the guide sleeve 29. Thereto, the stepper 25 comprises a pipe portion 36 that is concentric with the base portion 35 and extends in the axial direction from the base portion 35 into the recess 27 past the end rim 31 of the guide sleeve 29. The stepper 25 comprises an axial channel 37 extending in the axial direction from the free end of the pipe portion 36 and all the way into the base portion 35. The axial channel 37 is always/constantly in fluid communication with the second chamber 18. Thereto the stepper 25 comprises a radial channel 38, which is arranged in the base portion 35 at a radial plane through the base portion 35 that is aligned with the opening 32 in the guide sleeve 29. The radial channel 38 extends from the axial channel 37 and opens in the envelope surface of the base portion 35. Thus, the radial channel 38 is aligned with the opening 32 in the guide sleeve 29 in one position of the set of positions, and thereby setting the first chamber 17 and the second chamber 18 in fluid communication with each other. The stepper 25 may comprise a plurality of radial channels extending from the axial channel 37 to the envelope surface of the base portion 35. A seal 39 is arranged in the base portion 35 at the interface between the base portion 35 of the stepper 25 and the guide sleeve 29, wherein said seal 39 is arranged about the opening of the radial channel 38.

At least one circumferential O-ring 40 is arranged at the interface between the guide sleeve 29 and the base portion 35 of the steeper 25, said O-ring 40 being arranged to increase the friction between the guide sleeve 29 and the stepper 25, such that the stepper 25 is standing still after the plunger 26 has rotated the stepper 25 to its next position. In an alternative embodiment, the stepper 25 can be kept in the predefined positions by means of a mechanical index element, i.e. a ball that is arranged in the stepper 25 and that is biased by means of a spring, said ball being configured to engage recesses in the inner surface of the guide sleeve.

Thereto, the stepper 25 comprises a tooth-shaped rim 41 at the transition between the base portion 35 and the pipe portion 36, the tooth-shaped rim 41 facing the bottom of the recess 27, i.e. facing the plunger 26. The tooth-shaped rim 41 is configured to be engaged by the plunger 26, in order to turn the stepper 25 to its next position.

The plunger 26 is arranged adjacent the bottom of the recess 27, wherein the liquid and pressure in the second chamber 18 always have effect on the end surface of the plunger 26. The plunger 26 comprises a circumferential seal 42 that is in engagement with the recess 27. The plunger 26 is arranged radially outside the pipe portion 36 of the stepper 25, i.e. the plunger 26 is in telescopic engagement with the pipe portion 36. A circumferential seal 43 is arranged between the pipe portion 36 of the stepper 25 and the plunger 26. The plunger 26 is movable in the axial direction in relation to the recess 27 and is guided in the axial direction by means of the guide sleeve 29 and the pipe portion 36 of the stepper 25. The above mentioned spring member 28 is arranged between the end rim 31 of the guide sleeve 29 and a radially extending flange 44 of the plunger 26.

The plunger 26 comprises a main portion 45 and an engagement portion 46. The engagement portion 46 of the plunger 26 comprises radially extending pins 47 configured to engage the tooth-shaped rim 41 of the stepper 25 in order to turn the stepper 25 in a direction of rotation when the plunger 26 is displaced in the axial direction towards the stepper 25, i.e. from the inactive position towards the active position. The engagement portion 46 can in the disclosed embodiment turn a few degrees in the direction of rotation of the stepper 25 in relation to the main portion 45, in order to be able to disengage the tooth-shaped rim 41 without turning the stepper 25 in an opposite direction in relation to the direction of rotation of the stepper 25 when the second pressure [P2] in the second chamber 18 is decreasing and the plunger 26 is returned to its inactive position by means of the spring member 28. In the disclosed embodiment the engagement portion 46 is inserted into a bore of the main portion 45, wherein there is a radial gap between the main portion 45 and the engagement portion 46. Said bore of the main portion 45 is concentric with the pipe portion 36 of the stepper 25. In the disclosed embodiment, see figure 3, the engagement portion 46 comprises a projection 48 that engage a recess 49 in the main portion 45. The projection 48 of the engagement portion 46 has a less extent in the circumferential direction than the recess 49 of the main portion 45, in order to permit a mutual movement between the main portion 45 and the engagement portion 46 in the direction of rotation of the stepper 25. The engagement portion 46 is biased in the opposite direction in relation to the direction of rotation of the stepper 25, by means of a finger shaped segment 50 that engage the bore of the main portion 45.

The main portion 45 of the plunger 26 comprises at least one wing 51 running along a groove 52 in the guide sleeve 29, such that the main portion 45 of the plunger 26 may not rotate in relation to the guide sleeve 29.

The part of the recess 27 comprising the tooth-shaped rim 41 and the spring member 28 is sealed off in relation to the second chamber 18 and is in fluid communication with the first chamber 17. The end cap 34 is arranged to close and seal the recess 27 in relation to the surrounding liquid.

It shall be pointed out that the guide sleeve 29, in an alternative embodiment, may be constituted by the inner wall of the recess 27.

According to a preferred embodiment the control mechanism also comprises a timing mechanism, generally designated 53. The timing mechanism 53 is located in the conduit 19 extending between the first chamber 17 and the recess 27. The timing mechanism 53 is configured to regulate a minimum cross sectional area of the conduit 19, and thereby the time it takes for a given amount of control fluid to flow from the first chamber 17 to the second chamber 18. In the disclosed embodiment the timing mechanism 53 comprises a set of holes having different diameters. The timing mechanism 53 is positioned/turned such that the selected hole is aligned with the conduit 19.

According to a preferred embodiment a bypass 54 extends from the conduit 19, preferably at a location between the timing mechanism 53 and the stepper 25, to the second chamber 18. A check-valve 55 is arranged in the bypass 54 and is configured to admit fluid flow from the conduit 19 to the second chamber 18. If the stepper 25 for some reason is mounted in an incorrect starting position, i.e. in a position where the fluid communication between the first chamber 17 and the second chamber 18 is prevented and the second chamber 18 is emptied, the bypass 54 admit proper action of the flush valve 12 by admitting the control fluid to move from the first chamber 17 to the second chamber 18 via said bypass 54. Thereafter the check-valve 55 is closed and the plunger 26 engages the steeper 25 as described above. In the disclosed embodiment the timing mechanism 53 and the check-valve 55 are combined into one unit.

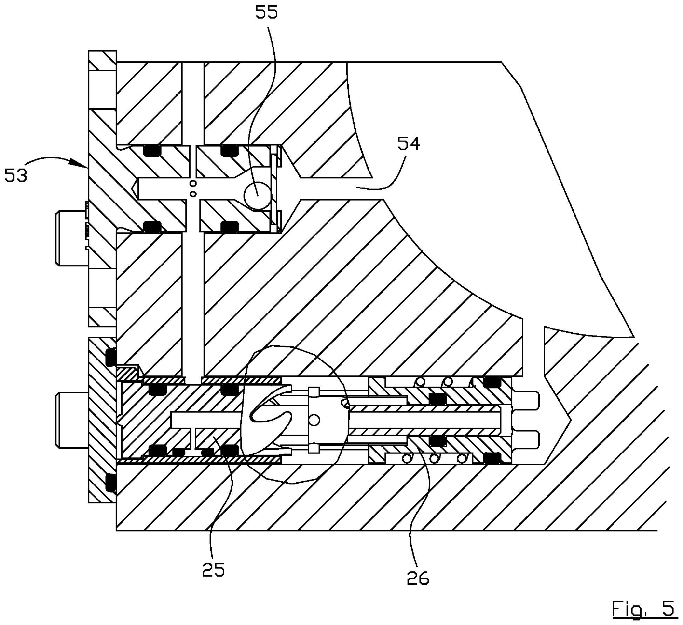

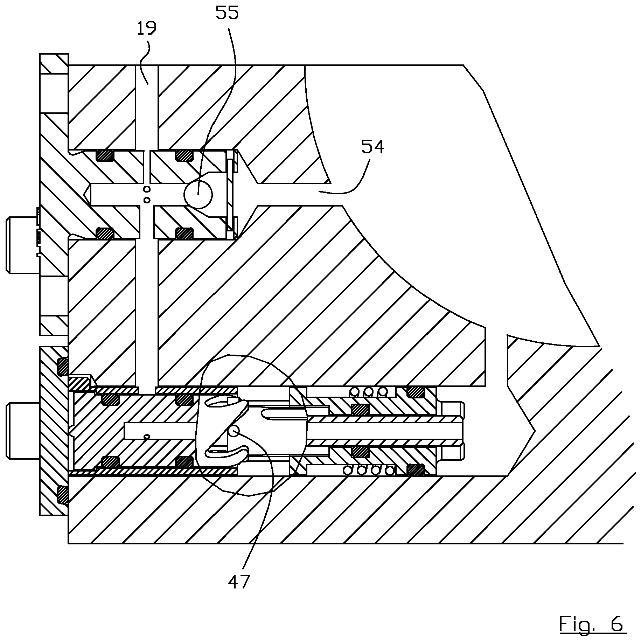

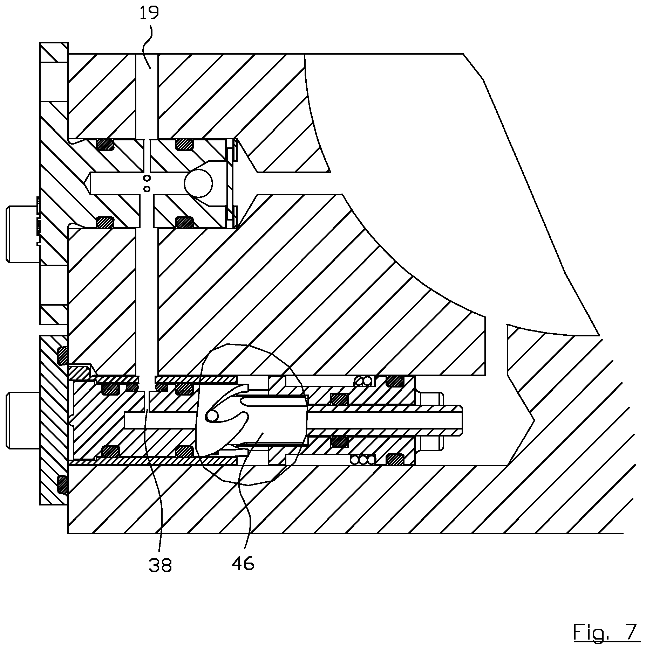

Reference is now specifically made to figures 5-7. In figure 5 the control liquid is in the first chamber 17 and the valve member 23 is located in the second portion 22" of the third chamber 22, i.e. the flush valve 12 is open. However, the stepper 25 has been mounted in an incorrect position, i.e. the radial channel 38 is not aligned with the conduit 19 extending to the first chamber 17. When the pump 5 is activated the second pressure [P2] will decrease and the control fluid will run from the first chamber 17 via the timing mechanism 53 and the bypass 54 to the second chamber 18. The diaphragm 21 will move upwards and push the valve member 23 into the first portion 22' of the third chamber 22, i.e. closing the flush valve 12. Then the second pressure [P2] in the second chamber 18 will arise and exceed the first pressure [P1] in the first chamber 17. Thereby the check-valve 55 will close the bypass 54, see figure 6. The second pressure [P2] in the second chamber 18 will move the plunger 26 from the inactive position towards the active position. During the displacement of the plunger 26, the pins 47 of the engagement portion 46 of the plunger 26 engage the tooth-shaped rim 41 of the stepper 25 and the stepper 25 is turned/revolved. In figure 7 the turning of the stepper 25 is completed and the radial channel 38 is aligned with the opening 32 in the guide sleeve 29. The control fluid will now run from the second chamber 18 towards the first chamber 17 via the control mechanism, i.e. inside the pipe portion 36 of the stepper 25, and when the second pressure [P2] in the second chamber 18 is decreasing the plunger 26 will be returned to its inactive position be means of the spring 28. During the return stroke of the plunger 26 the engagement portion 46 of the plunger 26 will turn a few degrees in the direction of rotation of the stepper 25 in order for the pins 47 to disengage the teeth of the tooth-shaped rim 41. Thereafter the plunger 26 is back in the inactive position as disclosed in figure 5. Next time the pump 5 is activated the flush valve 12 is open.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equipment may be modified in all kinds of ways within the scope of the appended claims.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

## Claims

1. A flush valve suitable for being connected with a pump (5) that is located in a reservoir (2) containing liquid, the flush valve (12) comprising:
- an inlet (13) configured to be in fluid communication with a volute (9) of said pump (5),
- an outlet (14) configured to open into said reservoir (2), and
- a valve arrangement (15), wherein the valve arrangement (15) comprises:
- a first chamber (17), a second chamber (18) that is partly delimited by a diaphragm (21), and a conduit (19) extending between and connecting the first chamber (17) and the second chamber (18),
- a third chamber (22) that connects the inlet (13) and the outlet (14) of the flush valve (12) and that is partly delimited by said diaphragm (21), the third chamber (22) comprising a valve member (23) configured to control a fluid flow from the inlet (13) to the outlet (14) based on the position of said diaphragm (21), and
- a control mechanism arranged in said conduit (19),
the flush valve (12) being **characterized in that** said control mechanism comprises a stepper (25) and a plunger (26), the plunger (26) being displaceable back and forth between an inactive position and an active position, the plunger (26) being biased towards said inactive position and being displaced towards said active position by means of the second pressure [P2] in the second chamber (18) when said second pressure [P2] in the second chamber (18) is greater than a threshold value [PT], the plunger (26) being configured to engage the stepper (25) when the plunger (26) is displaced towards the active position, wherein the stepper (25), each time the plunger (26) engages the stepper (25), changes position once in a repeated set of positions according to a step-by-step routine, and wherein the stepper (25) in at least one position of said set of positions enables fluid communication between the first chamber (17) and the second chamber (18) via said conduit (19).

2. The flush valve according to claim 1, wherein the stepper (25) in at least one position of said set of positions prevents fluid communication between the first chamber (17) and the second chamber (18) via said conduit (19).

3. The flush valve according to claim 1 or 2, wherein the stepper (25) is arranged in a recess (27) and is configured to change position by a revolving motion in relation to said recess (27).

4. The flush valve according to any preceding claim, wherein the first chamber (17) is at least partly delimited by a bellows (20), an outer side of the bellows (20) being configured to face the liquid in the reservoir (2).

5. The flush valve according to any of claims 1-4, wherein the control mechanism comprises a timing mechanism (53), the timing mechanism (53) being located in the conduit (19) between the first chamber (17) and the stepper (25) and being configured to regulate a minimum cross sectional area of the conduit (19).

6. The flush valve according to claim 5, wherein a bypass (54) extends from the conduit (19), at a location between the timing mechanism (53) and the stepper (25), to the second chamber (18), wherein a check-valve (55) is arranged in the bypass (54) and is configured to admit fluid flow from the conduit (19) to the second chamber (18).

7. The flush valve according to any preceding claim, wherein the pressure threshold (PT) is equal to or more than a first pressure [P1] in the first chamber (17).

8. The flush valve according to any preceding claim, wherein the valve member (23) is constituted by a ball.

9. The flush valve according to any preceding claim, wherein the control liquid is constituted by hydraulic oil.

10. A pump station comprising:
- a reservoir (2) configured to contain liquid,
- a pump (5) that is located in said reservoir (2), and
- a flush valve (12) according to claim 1 and being connected with said pump (5) ; whereby the first chamber (17) of the flush valve (12) contains a control liquid.

## Patentansprüche

1. Spülventil, das dazu geeignet ist, mit einer Pumpe (5) verbunden zu werden, die sich in einem eine Flüssigkeit enthaltenden Vorratsbehälter (2) befindet, wobei das Spülventil (12) aufweist:
- einen Einlass (13), der dafür konfiguriert ist, mit einer Spirale (9) der Pumpe (5) in Fluidverbindung zu stehen;
- einen Auslass (14), der dafür konfiguriert ist, sich in den Vorratsbehälter (2) zu öffnen; und
- eine Ventilanordnung (15),
wobei die Ventilanordnung (15) aufweist:
- eine erste Kammer (17), eine zweite Kammer (18), die teilweise durch eine Membran (21) begrenzt ist, und eine Leitung (19), die sich zwischen der ersten Kammer (17) und der zweiten Kammer (18) erstreckt und diese verbindet;
- eine dritte Kammer (22), die den Einlass (13) und den Auslass (14) des Spülventils (12) verbindet und die teilweise durch die Membran (21) begrenzt ist, wobei die dritte Kammer (22) ein Ventilelement (23) aufweist, das dafür konfiguriert ist, einen Fluiddurchfluss vom Einlass (13) zum Auslass (14) basierend auf der Position der Membran (21) zu steuern; und
- einen in der Leitung (19) angeordneten Steuermechanismus,
wobei das Spülventil (12) **dadurch gekennzeichnet ist, dass**
der Steuermechanismus einen Schrittmotor (25) und einen Kolben (26) aufweist, wobei der Kolben (26) zwischen einer inaktiven Position und einer aktiven Position hin- und hergehend beweglich ist, wobei der Kolben (26) in Richtung zur inaktiven Position vorgespannt ist und mittels des zweiten Drucks [P2] in der zweiten Kammer (18) in Richtung zur aktiven Position verschoben ist, wenn der zweite Druck [P2] in der zweiten Kammer (18) größer ist als ein Druckschwellenwert [PT], wobei der Kolben (26) dafür konfiguriert ist, mit dem Schrittmotor (25) in Eingriff zu kommen, wenn der Kolben (26) in Richtung zur aktiven Position verschoben wird, wobei der Schrittmotor (25) jedes Mal, wenn der Kolben (26) mit dem Schrittmotor (25) in Eingriff steht, die Position in einem wiederholten Satz von Positionen gemäß einer Einzelschritt-Routine einmal ändert, und wobei der Schrittmotor (25) in mindestens einer Position des Satzes von Position eine Fluidkommunikation zwischen der ersten Kammer (17) und der zweiten Kammer (18) über die Leitung (19) ermöglicht.

2. Spülventil nach Anspruch 1, wobei der Schrittmotor (25) in mindestens einer Position des Satzes von Positionen eine Fluidkommunikation zwischen der ersten Kammer (17) und der zweiten Kammer (18) über die Leitung (19) verhindert.

3. Spülventil nach Anspruch 1 oder 2, wobei der Schrittmotor (25) in einer Vertiefung (27) angeordnet und dafür konfiguriert ist, die Position durch eine Drehbewegung in Bezug auf die Vertiefung (27) zu ändern.

4. Spülventil nach einem der vorangehenden Ansprüche, wobei die erste Kammer (17) zumindest teilweise durch einen Balg (20) begrenzt ist, wobei eine Außenseite des Balgs (20) derart konfiguriert ist, dass sie der Flüssigkeit im Vorratsbehälter (2) zugewandt ist.

5. Spülventil nach einem der Ansprüche 1 bis 4, wobei der Steuermechanismus einen Zeitsteuerungsmechanismus (53) aufweist, wobei der Zeitsteuerungsmechanismus (53) in der Leitung (19) zwischen der ersten Kammer (17) und dem Schrittmotor (25) angeordnet und dafür konfiguriert ist, eine minimale Querschnittsfläche der Leitung (19) zu regulieren.

6. Spülventil nach Anspruch 5, wobei sich eine Umgehungsleitung (54) an einer Position zwischen dem Zeitsteuerungsmechanismus (53) und dem Schrittmotor (25) von der Leitung (19) zur zweiten Kammer (18) erstreckt, wobei ein Rückschlagventil (55) in der Umgehungsleitung (54) angeordnet und dafür konfiguriert ist, einen Fluiddurchfluss von der Leitung (19) zur zweiten Kammer (18) zu ermöglichen.

7. Spülventil nach einem der vorangehenden Ansprüche, wobei der Druckschwellenwert (PT) größer oder gleich einem ersten Druck [P1] in der ersten Kammer (17) ist.

8. Spülventil nach einem der vorangehenden Ansprüche, wobei das Ventilelement (23) durch eine Kugel gebildet ist.

9. Spülventil nach einem der vorangehenden Ansprüche, wobei die Steuerflüssigkeit Hydrauliköl ist.

10. Pumpstation mit:
- einem Vorratsbehälter (2), der dafür konfiguriert ist, eine Flüssigkeit aufzunehmen;
- einer im Vorratsbehälter (2) angeordneten Pumpe (5); und
- einem Spülventil (12) nach Anspruch 1, das mit der Pumpe (5) verbunden ist, wobei die erste Kammer (17) des Spülventils (12) eine Steuerflüssigkeit enthält.

## Revendications

1. Vanne de vidange appropriée pour être raccordée à une pompe (5) qui est positionnée dans un réservoir (2) contenant du liquide, la vanne de vidange (12) comprenant :
- une entrée (13) configurée pour être en communication de fluide avec une volute (9) de ladite pompe (5),
- une sortie (14) configurée pour s'ouvrir dans ledit réservoir (2), et
- un agencement de vanne (15),
dans laquelle l'agencement de vanne (15) comprend :
- une première chambre (17), une deuxième chambre (18) qui est partiellement délimitée par un diaphragme (21), et un conduit (19) s'étendant entre et raccordant la première chambre (17) et la deuxième chambre (18),
- une troisième chambre (22) qui raccorde l'entrée (13) et la sortie (14) de la vanne de vidange (12) et qui est partiellement délimitée par ledit diaphragme (21), la troisième chambre (22) comprenant un élément de vanne (23) configurée pour contrôler un écoulement de fluide de l'entrée (13) à la sortie (14) en fonction de la position dudit diaphragme (21), et
- un mécanisme de commande agencé dans ledit conduit (19),
la vanne de vidange (12) étant **caractérisée en ce que** ledit mécanisme de commande comprend un moteur pas-à-pas (25) et un piston plongeur (26), le piston plongeur (26) pouvant se déplacer d'avant en arrière entre une position inactive et une position active, le piston plongeur (26) étant sollicité vers ladite position inactive et étant déplacé vers ladite position active au moyen de la seconde pression [P2] dans la deuxième chambre (18) lorsque ladite seconde pression [P2] dans la deuxième chambre (18) est supérieure à une valeur de seuil [PT], le piston plongeur (26) étant configuré pour mettre en prise le moteur pas-à-pas (25) lorsque le piston plongeur (26) est déplacé vers la position active, dans lequel le moteur pas-à-pas (25), chaque fois que le piston plongeur (26) met en prise le moteur pas-à-pas (25), change de position une fois dans un ensemble de positions répété selon une routine pas-à-pas, et dans lequel le moteur pas-à-pas (25) dans au moins une position dudit ensemble de positions permet la communication de fluide entre la première chambre (17) et la deuxième chambre (18) via ledit conduit (19) .

2. Vanne de vidange selon la revendication 1, dans laquelle le moteur pas-à-pas (25) dans au moins une position dudit ensemble de positions empêche la communication de fluide entre la première chambre (17) et la deuxième chambre (18) via ledit conduit (19).

3. Vanne de vidange selon la revendication 1 ou 2, dans laquelle le moteur pas-à-pas (25) est agencé dans un évidement (27) et est configuré pour changer de position par un mouvement de révolution par rapport audit évidement (27).

4. Vanne de vidange selon l'une quelconque des revendications précédentes, dans laquelle la première chambre (17) est au moins partiellement délimitée par un soufflet (20), un côté externe du soufflet (20) étant configuré pour faire face au liquide dans le réservoir (2).

5. Vanne de vidange selon l'une quelconque des revendications 1 à 4, dans laquelle le mécanisme de commande comprend un mécanisme de synchronisation (53), le mécanisme de synchronisation (53) étant positionné dans le conduit (19) entre la première chambre (17) et le moteur pas-à-pas (25) et étant configuré pour réguler une section transversale minimum du conduit (19) .

6. Vanne de vidange selon la revendication 5, dans laquelle une dérivation (54) s'étend à partir du conduit (19), à un emplacement entre le mécanisme de synchronisation (53) et le moteur pas-à-pas (25), jusqu'à la deuxième chambre (18), dans lequel une vanne de non-retour (55) est agencée dans la dérivation (54) et est configurée pour admettre un écoulement de fluide du conduit (19) à la deuxième chambre (18).

7. Vanne de vidange selon l'une quelconque des revendications précédentes, dans laquelle le seuil de pression (PT) est égal ou supérieur à une première pression [P1] dans la première chambre (17).

8. Vanne de vidange selon l'une quelconque des revendications précédentes, dans laquelle l'élément de vanne (23) est constitué par une bille.

9. Vanne de vidange selon l'une quelconque des revendications précédentes, dans laquelle le liquide de commande est constitué par de l'huile hydraulique.

10. Station de pompe comprenant :
- un réservoir (2) configuré pour contenir du liquide,
- une pompe (5) qui est positionnée dans ledit réservoir (2), et
- une vanne de vidange (12) selon la revendication 1 et étant raccordée à ladite pompe (5) ; moyennant quoi la première chambre (17) de la vanne de vidange (12) contient un liquide de commande.
